# EUROPÄISCHE PATENTANMELDUNG

(11) **EP 0 534 055 A1**
(43) Veröffentlichungstag der Anmeldung: **31.03.1993**
(21) Anmeldenummer: 92107920.8
(22) Anmeldetag: 12.05.1992
(51) Int. Cl.: G01D 5/14, G01D 5/16, G01B 7/30

(54) **Drehmeldesystem**

(30) Priorität: 01.08.1991 DE 4125482
(71) Anmelder: Deutsche Aerospace AG, D-81663 München (DE)
(72) Erfinder: Hofmann, Fritz, W-8000 München 83 (DE)

(57) **Zusammenfassung**

Ein Drehmeldesystem, welches aus einem drehpositionierbaren, zylinderförmigen Permanentmagneten 12 mit senkrecht zur Drehachse des Permanentmagneten verlaufender Magnetachse sowie aus zwei, mit ihren Meßachsen A, B in Umfangsrichtung der Drehachse zueinander versetzten Hallelementen 18, 20 zur Erzeugung von sich jeweils sinusförmig in Abhängigkeit von der Drehposition des Permanentmagneten ändernden, um einen fest vorgegebenen Phasenwinkelabstand von 90° zueinander vorschobenen Meßsignalen besteht, ist im Hinblick auf eine einfache, kostengünstige und äußerst platzsparende Bauweise erfindungsgemäß dadurch gekennzeichnet, daß die Hallelemente auf einem gemeinsamen, einstückigen Sensorträger 4, 26 fest montiert sind und der Permanentmagnet zur Einjustierung der 90°-Phasenverschiebung in Richtung der Drehachse des Permanentmagneten bezüglich der Hallelemente höhenverstellbar angeordnet ist.
Ferner ist der gegenseitige Anstellwinkel α der beiden Meßachsen A, B im Hinblick auf eine weitere Platzersparnis unabhängig vom geforderten Phasenwinkelabstand vorgewählt und die Winkeldifferenz zwischen Anstellwinkel und vorgegebenem Phasenwinkel wird dadurch ausgeglichen, daß die Meßachsen jeweils mit einem entsprechenden Abstand e exzentrisch zur Drehachse des Permanentmagneten ausgerichtet sind.

## Beschreibung

Die Erfindung bezieht sich auf ein Drehmeldesystem nach dem Oberbegriff des Patentanspruchs 1.

Es ist bekannt (DE-0S 14 90 684), das magnetfeldabhängige Widerstandsverhalten von Feldplatten in der Weise für einen kontaktlosen Drehwiderstand zu nutzen, daß im Luftspalt zwischen zwei einander zugekehrten, zylindrischen Magnetpolstücken, von denen das erste feststeht und eine ebene Stirnfläche aufweist und das zweite um die Zylinderachse drehbar und mit einer zu dieser schräg verlaufenden Stirnfläche versehen ist, stirnseitig am feststehendem Polstück einander diametral gegenüberliegend zwei mit ihren Sensorachsen parallel zur Zylinderachse ausgerichtete Feldplatten befestigt sind derart, daß sich bei einer Drehung des zweiten Polstücks der Widerstandswert der einen und in gleicher Weise, jedoch mit einer der diametralen Anordnung entsprechenden Phasenverschiebung von 180°, auch der Widerstandswert der anderen Feldplatte nach Maßgahe der örtlichen Luftspaltänderung ändert. Ein derartiger Drehwiderstand, bei dem der Phasenwinkelabstand zwangsweise mit dem Winkelversatz der Sensorachsen in Umfangsrichtung der Drehachse identisch ist, ist nicht Gegenstand der Erfindung.

Bei Drehmeldesystemen der beanspruchten Art hingegen, wie sie in der DE-Hauptanmeldung P 41 13 880.5 beschrieben sind, auf die hiermit voll inhaltlich Bezug genommen wird, sind die als Hallelemente ausgebildeten Magnetfeld-Sensorelemente an zueinander keilförmig geneigten, zur Drehachse des Magnetelements parallelen Befestigungsflächen des Sensorträgers mit einem gegenseitigen Winkelabstand in Umfangsrichtung der Drehachse fest montiert, der wesentlich kleiner als der geforderte Phasen-Winkelabstand der Meßsignale gewählt ist, wobei die Winkeldifferenz zwischen dem gewählten Winkelabstand der Sensor-Meßachsen und dem geforderten Phasen-Winkelabstand der Meßsignale durch eine jeweils zur Drehachse exzentrische Anordnung der Meßachsen ausgeglichen und die unvermeidbar durch Fertigungstoleranzen bedingte Phasenwinkelstreuung durch eine in Richtung der Drehachse höhenverstellbare Positionierung des Magnetelements bezüglich der Sensorelemente eliminiert wird.

Aufgabe der Erfindung ist es, das Drehmeldesystem der beanspruchten Art in Richtung einer weiteren baulichen Vereinfachung und Miniaturisierung zu verbessern. eingangs genannten Art zu schaffen, das sich durch eine einfache, kostengünstige und zur Miniaturisierung geeignete Bauweise auszeichnet und zur Einhaltung des geforderten Phasenwinkelabstands der beiden Meßsignale nicht mehr zwangsläufig auf eine winkelabstandsgleiche Achsgeometrie der Sensor-Meßachsen angewiesen ist.

Diese Aufgabe wird erfindungsgemäß durch das im Patentanspruch 1 gekennzeichnete Drehmeldesystem gelöst.

Aufbauend auf der überraschenden Erkenntnis, daß die gegenseitige Phasenlage der Meßsignale nicht allein vom Winkelabstand der Sensorachsen abhängig, sondern auch durch die Höhenlage des Magnetelements bezüglich der Sensorelemente beeinflußbar ist, wird erfindungsgemäß eine erhebliche bauliche Vereinfachung dadurch erreicht, daß die Sensorelemente unter Verzicht auf eine komplizierte Nachjustierung ihrer Meßachsen auf einem gemeinsamen Einzelträger fest vormontiert und auf diesem bewußt mit den fertigungs- und montagebedingten Einbautoleranzen belassen, die daraus resultierenden Abweichungen vom Phasen-Sollabstand der Meßsignale hingegen problemlos durch einfache Höhenjustierung des Magnetelements relativ zu den Sensorachsen korrigiert werden. Hierdurch ist es möglich, das beanspruchte Drehmeldesystem trotz hoher Meßsignalgenauigkeit äußerst kostengünstig und in miniaturisierter Bauweise anzubieten.

Gemäß einem weiteren Aspekt der Erfindung wird durch die besondere geometrische Anordnung der Sensor-Meßachsen nach Anspruch 2 eine ganz wesentliche bauliche Verbesserung dadurch erreicht, daß der gegenseitige Winkelabstand der Sensorachsen von der zwangsweisen Verknüpfung mit der geforderten Soll-Phasenverschiebung der Meßsignale befreit und als unabhängige Variable in Übereinstimmung mit den jeweils vorliegenden Einbauverhältnissen optimal gewählt werden kann, während die Anpassung der Achsgeometrie an den Phasen-Sollwinkel durch eine entsprechend exzentrische Ausrichtung der Sensorachsen bezüglich der Drehachse des Magnetelementes erfolgt. Hierdurch lassen sich die Sensorelemente auf platz- und kostensparende Weise in Umfangsrichtung der Drehachse dicht nebeneinander liegend Positionieren und dennoch ein ausreichend hoher Phasenwinkelabstand der Sensorsignale von regelmäßig 90° einhalten. Dies ist ein entscheidender Beitrag für eine miniaturisierte, konstruktiv einfache Bauweise des Drehmeldesystems.

Eine besonders vorteilhafte Ausgestaltung der Erfindung besteht gemäß Anspruch 3 darin, daß die im Anspruch 2 angegebene Achsgeometrie und die im Anspruch 1 gekennzeichnete Phasenwinkel-Justierung miteinander kombiniert werden.

Im Hinblick auf eine einfache, platzsparende Bauweise werden als Sensorelemente gemäß Anspruch 4 vorzugsweise Hallelemente vorgesehen, und aus dem gleichen Grund besteht das Magnetelement gemäß Anspruch 5 zweckmäßigerweise aus einem Permanentmagneten, dessen magnetische Achse senkrecht zur Drehachse verläuft.

In weiterer vorteilhafter Ausgestaltung liegt der gegenseitige Schnittpunkt der Sensorachsen gemäß Anspruch 6 auf der dem Magnetelement abgewandten Seite der Sensorelemente und diesen näher als die Drehachse des Magnetelements, wodurch sich der für die Sensorordnung erforderliche Einbauraum ohne Beeinträchtigung der Drehwinkel-Ansprechempfindlichkeit weiter verringern läßt. Dabei hat sich gemäß Anspruch 7 ein Anstellwinkel für die Sensorachsen von etwa 60° als besonders vorteilhaft erwiesen.

Nach Anspruch **8** wird bei der nominellen Auslegung des Drehmeldesystems die Achsgeometrie der Sensorachsen gezielt so gewählt, daß sich in der bezüglich der Sensorachsen symmetrischen Höhenlage des Magnetelements bewußt eine Abweichung vom geforderten Phasenabstand der Meßsignale ergibt, welche größer als die maximal durch Fertigungsund Montagetoleranzen verursachte Phasenstreuung ist, so daß sich bei der späteren Justierung des Drehmeldesystems durch zunehmenden Höhenversatz des Magnetelements gegenüber der Symmetrielage sowohl positive wie auch negative Phasenstreuungen korrigieren lassen. Gemäß Anspruch **10** werden zur Höhenjustierung des Magnetelements in besonders bevorzugter, montagemäßig einfacher Weise in abestuften Dickenabmessungen vorgefertigte Distanzstücke verwendet, die aus einem magnetisch neutralen Material bestehen, um Störungen des vom Magnetelement erzeugten Magnetfeldes zu vermeiden.

Zwar ist es im Rahmen der Erfindung durchaus möglich, das Drehmeldesystem nach Art eines Bausatzes anzubieten, der einen vom Magentelement getrennten Sensorträger mit den daran befestigten Sensorelementen enthält, und die Justierung des Magnetelements bezüglich der Sensorachsen in einer vorgegebenen Lage erst am endgültigen Einbauort durchzuführen, aus Gründen einer größeren Anwenderfreundlichkeit empfiehlt es sich jedoch gemäß Anspruch **10**, sämtliche Elemente des Drehmeldesystems in einem gemeinsamen Gehäuse, welches zur Vermeidung äußerer Störeinflüsse magnetisch abgeschirmt ist, im endmontierten und justierten Zustand anzuordnen.

Die Erfindung wird nunmehr anhand eines Ausführungsbeispieles in Verbindung mit den Zeichnungen näher erläutert. Es zeigen in schematischer Darstellung:
Fig. 1 eine teilweise geschnittene Ansicht des Drehmeldesystems;
Fig. 2 die Aufsicht des Sensorträgers und des Magnetelements gemäß Fig. 1 und
Fig. 3 ein Diagramm zur Darstellung des Verlaufs der von den beiden Sensorelementen erzeugten Meßsignale in Abhängigkeit vom Drehwinkel des Magnetelements.

Das in den Fig. gezeigte Drehmeldesystem enthält ein nach außen abgeschlossenes, zweiteiliges Gehäuse 2 aus magnetisch neutralem Material, z.B. Aluminium, bestehend aus einem einstückigen Sensorträger 4 und einem Gehäusedeckel 6, welche auf der Außenseite von einem Abschirmblech aus magnetisch weichem Material umkleidet sind. Im Gehäuse 2 befindet sich ein flach-zylinderförmiges, an einer Welle 10 befestigtes Permanent-Magnetelement 12, welches über Lagerstellen 14 und 16 um eine gehäusefeste Drehachse D-D drehbeweglich gelagert ist und dessen magnetische N-S-Achse senkrecht zur Drehachse D-D verläuft.

Der Drehwinkel φ des Magnetelementes 12 wird durch zwei Hallelemente 18 und 20 abgegriffen, welche an den keilförmig zueinander angestellten, der Drehachse D zugekehrten Montageflächen 22, 24 eines einteilig am Träger 4 nach oben vorstehend angeformten Haltestegs 26 befestigt, z.B. mit diesem verklebt sind. Der Ausrichtung der Montageflächen 22, 24 entsprechend liegen die Meßachsen A, B der Sensorelemente 18, 20 in einer zur Drehachse D im wesentlichen senkrechten Ebene und verlaufen unter einem Anstellwinkel α geneigt zueinander und jeweils mit einem Abstand e exzentrisch zur Drehachse D, wobei ihr gegenseitiger Schnittpunkt S auf der sich durch die Keilspitze der Montageflächen 22, 24 und die Drehachse D erstreckenden Mittelebene M des Haltesteges 26 und auf der dem Magnetelement 12 abgekehrten Seite der Sensorelemente 18, 20 liegt.

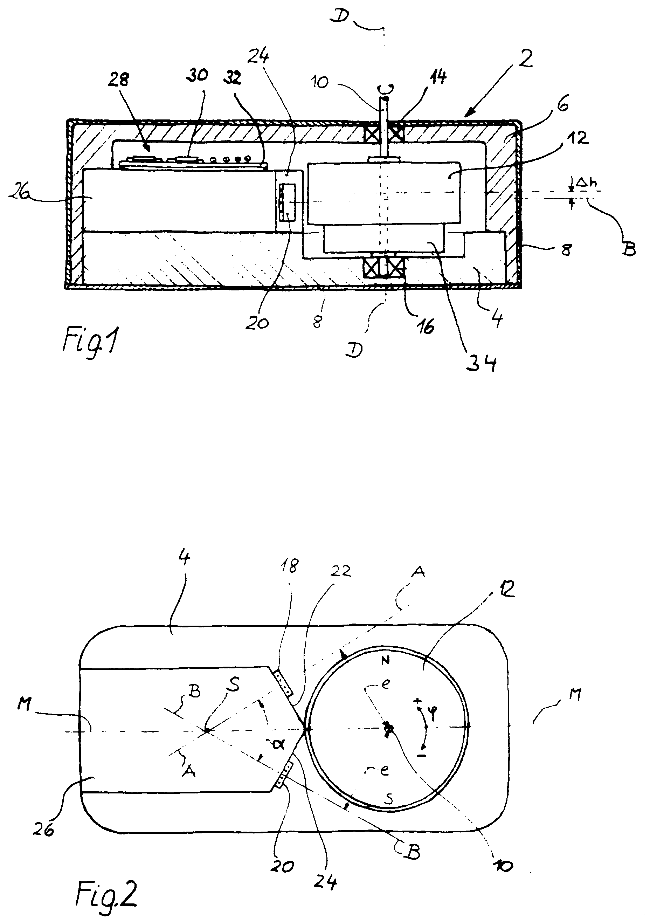

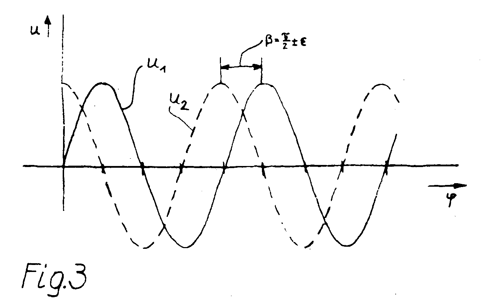

Der Drehwinkel φ des Magnetelementes 12 wird mit hoher Genauigkeit aus zwei, sich in Abhängigkeit vom Drehwinkel sinusförmig ändernden, um einen Phasen-Winkelabstand von 90° verschobenen, im übrigen aber identischen Meßsignalen u₁ und u₂ (Fig. 3) ermittelt. Von dem geforderten Signalverlauf weichen die von den Sensorelementen 18, 20 erzeugten Meßsignale aufgrund unvermeidbarer Fertigungs- und Montagetoleranzen des Drehmeldesystems ab. Diese Abweichungen, mit Ausnahme der Winkelabweichung ε vom geforderten Phasen-Sollwinkel β , werden durch ein den Hallelementen 18, 20 zugeordnetes Widerstandsnetzwerk 28, welches aus einer mit Ausgleichswiderständen 30 bestückten, auf dem Haltesteg 26 angeordneten Leiterplatine 32 besteht (Fig. 1), korrigiert.

Zur Einhaltung des geforderten Phasenwinkelabstands von 90° müssen die Sensor-Meßachsen bei üblichen Systemen in Umfangsrichtung der Drehachse D um einen Viertelkreisbogen zueinander versetzt sowie zentrisch auf die Drehachse D ausgerichtet und zum Abgleich der Phasen-Winkelstreuungen ε gegenseitig justierbar sein. Aufgrund der anhand der Fig. 2 geschilderten Achsgeometrie hingegen kann der Anstellwinkel α der Sensor-Meßachsen A, B als unabhängige Variable und wesentlich kleiner als 90°, nämlich etwa 60°, gewählt werden, so daß der gegenseitige Winkelversatz der Sensorelemente 18, 20 in Umfangsrichtung der Drehachse D und damit der für die Sensoranordnung erforderliche Einbauraum deutlich reduziert wird. Um mit dieser Achsgeometrie dennoch den geforderten Phasen-Winkelabstand von typischerweise 90° zu erhalten, verlaufen die Sensorachsen A und B Jeweils exzentrisch mit einem nach Maßgabe des Anstellwinkels α und des geforderten Phasen-Winkelabstands β bemessenen Abstand e zur Drehachse D. Aus dem Abstand e ergibt sich, in welcher Entfernung von der Keilspitze die Sensorelemente 18 und 20 auf den Montageflächen 22 bzw. 24 zu befestigen sind, während der Keilwinkel der Montageflächen 22, 24 durch den Anstellwinkel α festgelegt wird.

Die Sensorelemente 18, 20 werden mit der beschriebenen Achsgeometrie fest und unter Verzicht auf eine komplizierte, gegenseitige Justierung ihrer Meßachsen A, B am Sensorträger 4 montiert. Die dabei unvermeidbaren, fertigungs- und montagebedingten Phasenwinkelstreuungen ε hingegen werden auf baulich sehr einfache Weise durch einen Höhenversatz Δ h des Magnetelements 12 (Fig.1) gegenüber seiner zu den Sensorachsen A,B symmetrischen Lage korrigiert. Dies geschieht am einfachsten in der Weise, daß die Höhenlage des Magnetelements 12 durch Distanzstücke 34 unterschiedlicher Dicke, welche aus magnetisch neutralem Material bestehen, solange verändert wird, bis der Phasenwinkelabstand der von den Sensorelementen 18, 20 erzeugten Meßsignale exakt mit dem geforderten Sollwert (90°) übereinstimmt. Damit durch die Höhenjustierung des Magnetelements sowohl positive wie auch negative PhasenWinkelabweichungen ε eliminiert werden können, wird die Achsgeometrie der Sensorachsen A, B bewußt so gewählt, daß sich in der bezüglich der Sensorachsen A, B symmetrischen Höhenlage des Magentelements 12, also bei Δ h = 0, eine Abweichung vom geforderten Phasenwinkelabstand der Meßsignale ergibt, welche größer als die maximal fertigungs- und montagebedingte Phasenstreuung ist.

Liegen beide Sensorachsen A und B in der gleichen Ebene, so werden durch eine Änderung der Höhenlage des Magnetelements 12 beide Meßsignale, u₁ und u₂, in gleichem Maße gegensinnig zueinander verschoben. Will man hingegen erreichen, daß durch die Höhenjustierung des Magnetelements 12 nur jeweils eines der beiden Meßsignale, u₁ oder u₂, phasenverschoben wird, die Phasenlage des jeweils anderen Meßsignals, u₂ oder u₁, hingegen im wesentlichen unverändert bleibt, so werden die Sensorelemente 18, 20 in unterschiedlichen Höhenlagen an den Montageflächen 22, 24 befestigt, d.h. die Sensorachsen A, B liegen in in Richtung der Drehachse D zueinander versetzten, zur Drehachse D senkrechten Ebenen.

## Patentansprüche

1. Drehmeldesystem, bestehend aus mindestens einem drehpositionierbaren Magnetelement zur Erzeugung eines im wesentlichen senkrecht zur Drehachse des Magnetelements gerichteten Magnetfeldes sowie zwei, mit ihren Meßachsen unter einem Anstellwinkel zueinander in Umfangsrichtung der Drehachse versetzt angeordneten Magnetfeld-Sensorelementen zur Erzeugung von sich jeweils abhängig von der Drehposition des Magnetelements ändernden, um einen fest vorgegebnen Phasen-Sollwinkelabstand zueinander verschobenen Meßsignalen,
dadurch **gekennzeichnet**, daß
die Sensorelemente (18, 20) auf einem gemeinsamen, einteiligen Sensorträger (4) fest montiert sind und das Magnetelement (12) zur Einjustierung des PhasenSollwinkelabstands in Richtung der Drehachse (D) bezüglich der Sensorelemente höhenverstellbar angeordnet ist.

2. Drehmeldesystem, bestehend aus mindestens einem drehpositionierbaren Magnetelement zur Erzeugung eines im wesentlichen senkrecht zur Drehachse des Magnetelements gerichteten Magnetfeldes sowie zwei, mit ihren Meßachsen unter einem Anstellwinkel zueinander in Umfangsrichtung der Drehachse versetzt angeordneten Magnetfeld-Sensorelementen zur Erzeugung von sich jeweils abhängig von der Drehposition des Magnetelements ändernden, um einen fest vorgegebenen Phasen-Sollwinkelabstand zueinander verschobenen Meßsignalen,
dadurch **gekennzeichnet**, daß
die Meßachsen (A, B) der beiden Sensorelemente (18, 20) unter einem als unabhängige Variable vorgewählten, vom Phasen-Sollwinkelabstand abweichenden Anstellwinkel (α) angeordnet sind und jeweils exzentrisch mit einem die Winkeldifferenz zwischen gewähltem Anstellwinkel und Phasen-Sollwinkelabstand ausgleichenden Abstand (e) zur Drehachse (D) des Magnetelements (12) verlaufen.

3. Drehmeldesystem nach Anspruch 2,
dadurch **gekennzeichnet**, daß
das Magnetelement (12) zum Einjustieren des Phasen-Sollwinkelabstands in Richtung der Drehachse (D) bezüglich der Sensorelemente (18, 20) höhenverstellbar angeordnet ist.

4. Drehmeldesystem nach einem der vorhergehenden Ansprüche,
dadurch **gekennzeichnet**, daß
als Magnetfeld-Sensorelemente (18, 20) Hallelemente vorgesehen sind.

5. Drehmeldesystem nach einem der vorhergehenden Ansprüche,
dadurch **gekennzeichnet**, daß
das Magnetelement (12) aus einem im Querschnitt kreisförmigen Permanentmagneten mit bezüglich der Drehachse (D) diametral einander gegenüberliegenden Magnetpolen (N, S) besteht.

6. Drehmeldesystem nach einem der vorhergehenden Ansprüche,
dadurch **gekennzeichnet**, daß
der gegenseitige Schnittpunkt (S) der Meßachsen (A, B) auf der dem Magnetelement (12) abgewandten Seite der Sensorelemente (18, 20) liegt.

7. Drehmeldesystem nach Anspruch 6,
dadurch **gekennzeichnet**, daß
die Meßachsen (A, B) einen Anstellwinkel (α) von weniger als 90°, vorzugsweise etwa 60°, besitzen.

8. Drehmeldesystem nach einem der vorhergehenden Ansprüche,
dadurch **gekennzeichnet**, daß
das Magnetelement (12) im einjustierten Zustand eine bezüglich der Sensorelemente (18, 20) unsymmetrische Höhenlage besitzt.

9. Drehmeldesystem nach einem der vorhergehenden Ansprüche,
dadurch **gekennzeichnet**, daß
die Höhenlage des Magnetelements (12) durch unterschiedlich bemessene Distanzstücke (34) aus magnetisch neutralem Material einstellbar ist.

10. Drehmeldesytem nach einem der vorhergehenden Ansprüche,
dadurch **gekennzeichnet**, daß
das Magnetelement (12) und die Sensorelemente (18, 20) einschließlich des Sensorträgers (4) in einem magnetisch abgeschirmten Gehäuse (2, 8) angeordnet sind.
